# EUROPEAN PATENT SPECIFICATION

(11) **EP 1 411 511 B1**
(45) Date of publication and mention of the grant of the patent: **17.12.2008**
(21) Application number: 03256298.5
(22) Date of filing: 07.10.2003
(51) Int. Cl.: G11B 15/675, G11B 15/665

(54) **Tape deck mechanism**
Bandlaufwerkmechanismus
Mécanisme d'appareil à bande

(30) Priority: 08.10.2002 KR 2002061325
(43) Date of publication of application: 21.04.2004
(73) Proprietor: SAMSUNG ELECTRONICS CO., LTD., Suwon-si, Gyeonggi-do 442-742 (KR)
(72) Inventor: Kim, Bong-joo, Suwon-city, Gyunggi-do (KR); Choi, Hyeong-seok 205-1404 Hwanggol-maeul, Suwon-city Gyunggi-do (KR); Seo, Jae-kab 601-902 Yuweon Apartment, Suwon-city Gyunggi-do (KR)
(74) Representative: Grey, Ian Michael

(56) References cited:
- US-A- 6 038 100
- US-A1- 2001 012 173
- US-B1- 6 198 596

## Description

The present invention relates to a tape deck mechanism comprising a main chassis, a sub-chassis moveable between unloaded and loaded positions over the main chassis, a cassette carrier moveable relative to the sub-chassis between unloaded and loaded positions, and a latch for retaining the cassette carrier in its loaded position. Such a tape deck mechanism is known from US 2001/012 173 A1. Tape deck mechanisms are also known from US 6 198 596 B1 and US 6 038 100 A. These documents disclose the features of the preamble of claim 1.

Tape decks having rotating heads for tape recording and reproducing apparatuses, e.g. camcorders, video cassette recorders (VCR) and digital audio tape recorders (DAT), are well-known in general.

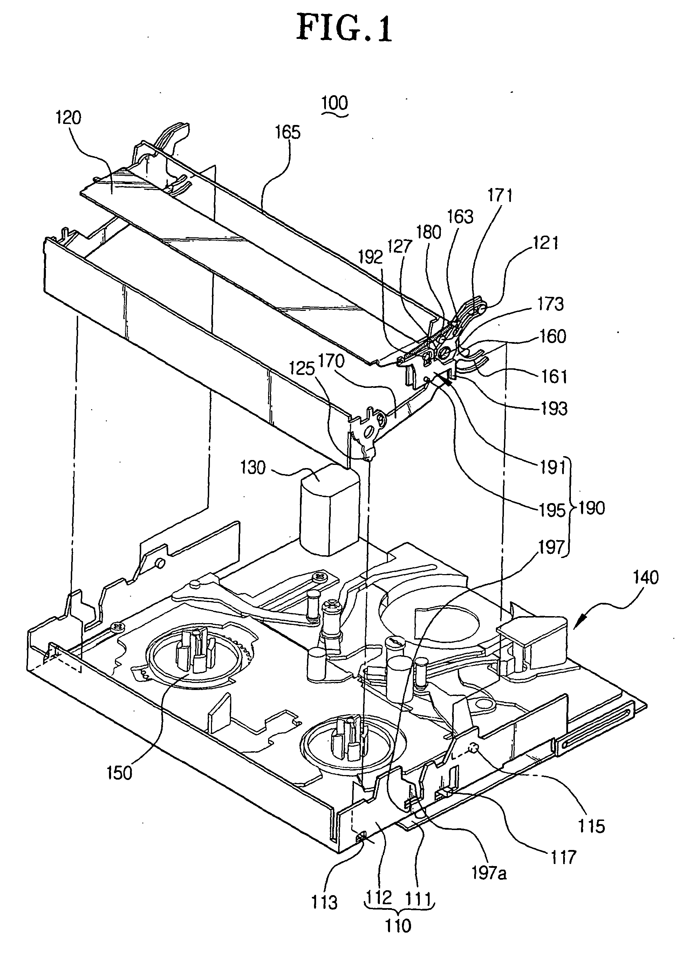

Figure 1 shows the moving deck 100 of a camcorder. The camcorder used here merely as an example of a tape recorder.

Referring to Figure 1, the moving deck 100 includes a deck chassis 110, a tape cassette housing 120 and a locking device 190 for locking the tape cassette housing 120 onto the deck chassis 110. In the case of camcorders in particular, the deck chassis 110 includes a main-chassis 111 and a sub-chassis 112 that slides reciprocally over the main-chassis 111 during loading and unloading of a magnetic tape.

The tape cassette housing 120 is for removably loading a tape cassette. First and second link members 160, 170 hinged to opposite sides of the tape cassette housing 120 are slidingly connected to the sub chassis 112, thereby allowing the tape cassette housing 120 to ascend from and descend to the sub-chassis 112.

The locking device 190 includes a locking protrusion 195, a locking recess 197, complementary to the locking protrusion 195, and a locking lever 191 hinged to one side of the tape cassette housing 120. The locking lever 191 is connected to the first link member 160 by a resilient member 180. The locking protrusion 195 is generally cylindrical and protrudes from the side of the locking lever 191. This locking protrusion 195 is formed by drawing the side of the locking lever 191 or by providing a separate rotatable roller member (not shown) on the side surface of the locking lever 191. The locking recess 197 is integrally formed with the sub-chassis 112 by cutting away a part of a side of the sub chassis 112.

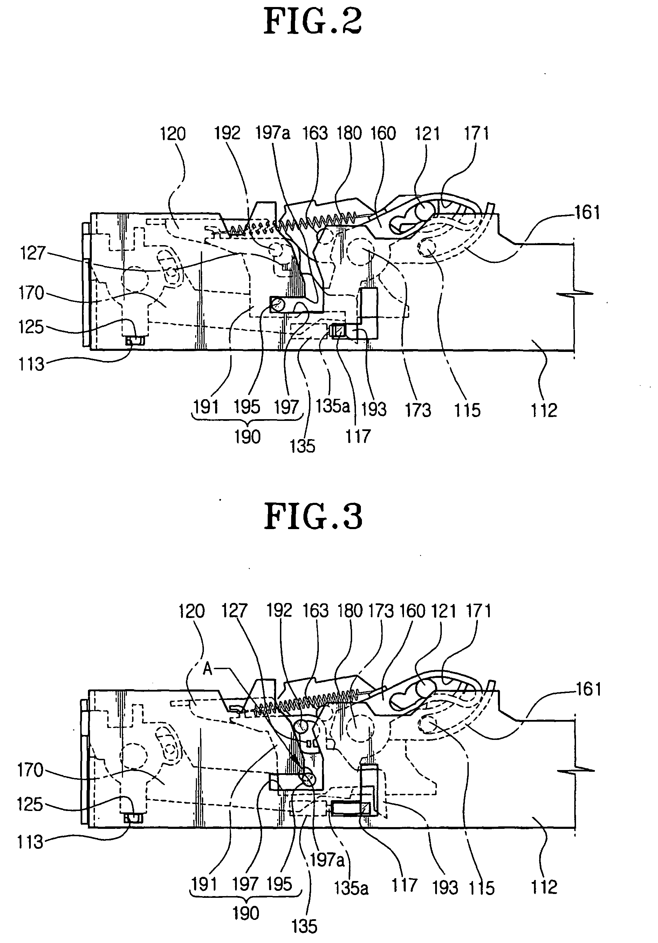

A tape cassette is loaded by the tape cassette housing 120, housing the tape cassette therein, being pressed toward the sub-chassis 112 and so that the locking protrusion 195 of the locking lever 191 is inserted into the locking recess 197 as shown in Figure 2.

A tape cassette is unloaded by the an unlocking lever 117, which is pivotably disposed on the sub-chassis 112, pressing an unlocking protrusion 193 formed at the end of the locking lever 191 so that the locking protrusion 195 is released from the locking recess 197. Simultaneously, the first and the second link members 160, 170 are pivoted by the recovery force of the resilient member 180 and, accordingly, the tape cassette housing 120 ascends away from the sub-chassis.

However, it is often the case with conventional tape recorders that the ascending/descending movement of the tape cassette housing is stopped with the locking protrusion 195 being blocked by an edge 197a of the locking recess 197 as the tape cassette is loaded/unloaded, as shown in Figure 3. This stoppage occurs since the locking protrusion 195 and the edge 197a of the locking recess 197 come into contact with each other at a contact point where the stress forces of the locking protrusion 195 and the edge 197a are in equilibrium. Stoppage occurs more frequently as the contact time of the locking protrusion 195 and the edge 197a increases. Accordingly, there has been a demand for reducing the contact time between the locking protrusion 195 and the edge 197a on the loading/unloading operations of the tape cassette.

A tape deck mechanism according to the present invention comprises a main chassis , a sub-chassis moveable between unloaded and loaded positions over the main chassis, a cassette carrier moveable relative to the sub-chassis between unloaded and loaded positions, and a latch for retaining the cassette carrier in its loaded position comprising a hook on the cassette carrier and a projection projecting inwardly from a side of the sub-chassis. The tape deck is characterised in that the hook defines a recess such that the projection is received in the recess when the cassette carrier is moved into its loaded position and is engaged by the hook to hold the cassette carrier in its loaded position.

Preferably, the surfaces of the hook and the projection which are engaged to hold the cases carrier in its loaded position are flat.

Preferably, the projection comprises a tab bent inwards from the side of the sub-chassis. More preferably, the hook is pivotably mounted to the cassette carrier and resilient means is provided for resiliently biasing the hook towards its locking position.

Embodiments of the present invention will now be described, by way of example, with reference to Figures 5 to 10 of the accompanying drawings, in which:-
Figure 1 is an exploded perspective view schematically showing the moving deck of a conventional camcorder;
Figure 2 is a side section view showing the tape cassette housing of Figure 1 being locked onto the deck chassis;
Figure 3 is a side section view showing the tape cassette housing of Figure 1 seated on the deck chassis;

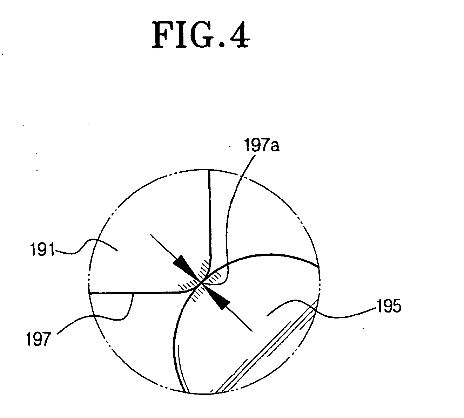

Figure 4 is a side section view magnifying part of A of Figure 3;
Figure 5 is an exploded perspective view schematically showing the moving deck of a first embodiment of the present invention;
Figure 6 is a side section view showing the tape cassette housing of Figure 5 seated on the deck chassis;
Figure 7 is an enlarged perspective view of part of B of Figure 6;
Figure 8 is an exploded perspective view schematically showing the moving deck of a second embodiment of the present invention;
Figure 9 is a side section view showing the tape cassette housing of Figure 8 seated on the deck chassis; and
Figure 10 is an enlarged perspective view of C of Figure 9.

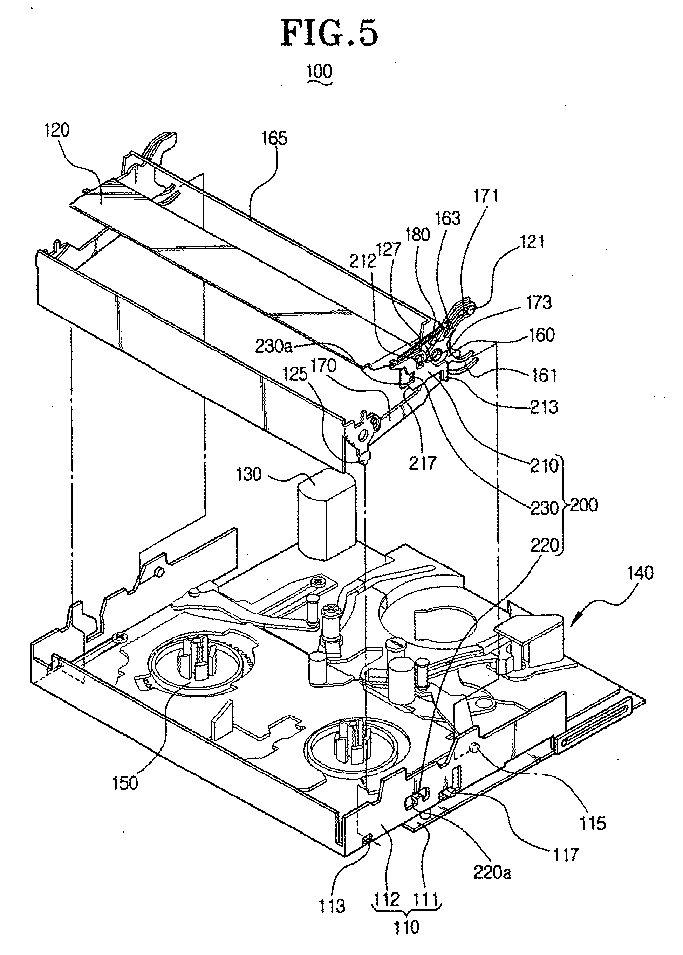

Referring to Figures 5 to 7, the moving deck 100 of a first tape recorder according to the present invention includes a deck chassis 110, a tape cassette housing 120 and a locking device 200 for locking the tape cassette housing.

The deck chassis 110 includes a main-chassis 111 and a sub-chassis 112. On the main-chassis 111 are provided a loading motor 130 and a capstan-driving unit 140, and on the sub-chassis 112 is provided a pair of reel tables 150.

The tape cassette housing 120 removably houses a tape cassette (not shown). First and second link members 160, 170, pivotably disposed on opposite sides of the tape cassette housing 120, are slidingly mounted on the sub-chassis 112, so that the tape cassette housing 120 can ascend from and descend to the sub-chassis 112. Each of the first link members 160 is hinged to the tape cassette housing 120 using a first hinge 163. Respective upper ends of the first link members 160 are connected to each other by a connecting member 165. Each of the first link members 160 is provided with first guide rails 161, disposed at a lower end thereof. The first guide rails 161 slidingly receives a first guide protrusion 115 of the sub-chassis 112. The second link members 170 are hinged to the first link members 160 using second hinges 173. Each of the second link members 170 has a mounting protrusion 125 formed at the bottom for insertion into a mounting opening 113 in the sub-chassis 112. Upper ends of the second link members 170 are provided with second guide rails 171 into which second guide protrusions 121, protruding from both sides of the tape cassette housing 120, are inserted. In one embodiment, it is preferred that the second hinges 173 protrude from the second link member 170, though other configurations can be implemented.

The locking device 200 includes a locking protrusion 220, a locking lever 210 and a locking recess 230. The locking protrusion 220 is integrally formed with the sub-chassis 112 and has at least one edge 220a. The formation of the edge 220a is achieved by forming the locking protrusion 220 with a non-circular traverse section. In this embodiment, the locking protrusion 220 is formed by cutting and bending a part of the sub-chassis 112 at or about 90° toward the inside of the sub chassis 112. Accordingly, the edges 220a are formed on both sides of the locking protrusion 220. When the locking protrusion 220 is formed integrally with the sub-chassis 112 in this way, the relatively complicated drawing process used for the conventional locking lever 191 (described in reference to Figure 1), or installation of a separate roller member (not shown) is not required. In one embodiment of the invention, the locking protrusion 220 is formed in a shape so that an edge 230a of the locking recess 230 comes into contact with the edge 220a right before the locking protrusion 220 is inserted to the locking recess 230 during cassette loading. Other shapes of locking protrusion 220 can be used.

The locking lever 210 is hinged to a side of the tape cassette housing 120 using a third hinge 212. The upper end of the locking lever 210 is connected to one of the first link members 160 by a resilient member 180, e.g. a helical spring. Due to the resilient member 180, the tape cassette housing 120 is capable of resiliently ascending and descending for the close contacting with and separation from the sub-chassis 112. One side of the locking lever 210 is provided with the locking recess 230 into which the locking protrusion 220 is inserted so as to lock the tape cassette housing 120 onto the sub-chassis 112 in a close contacting manner. The corner 230a of the locking recess 230 is connected to a guide surface 217 extending from the lower end of the locking lever 210. The locking lever 210 pivots within a range that is determined by a regulating protrusion 127, protruding from the side of the tape cassette housing 120, and a second hinge 173, protruding from the second link member 170. Accordingly, excessive pivoting movement of the locking lever 210 due to the recovery force of the resilient lever 210 can be prevented. An unlocking protrusion 213 protrudes from a lower end of the locking lever 210. The unlocking protrusion 213 comes into contact with an end of the unlocking lever 117, pivotably disposed on the sub-chassis 112, when the tape cassette housing 120 is locked. Operation of the unlocking protrusion 213 will be described below.

Cassette loading is initiated by a user pressing the outer surface of the tape cassette housing 120 toward the deck chassis 110. Accordingly, the second link members 170 pivot along the second guide rails 121 so that the lower ends of the first link members 160 ascend. Since the first guide protrusions 115 of the sub-chassis 112 are slidingly received by the first guide rails 161 of the lower ends of the first link member 160, the interactive movement of the first and the second link members 160, 170 allows the tape cassette housing 120 to be brought into close contact the sub-chassis 112.

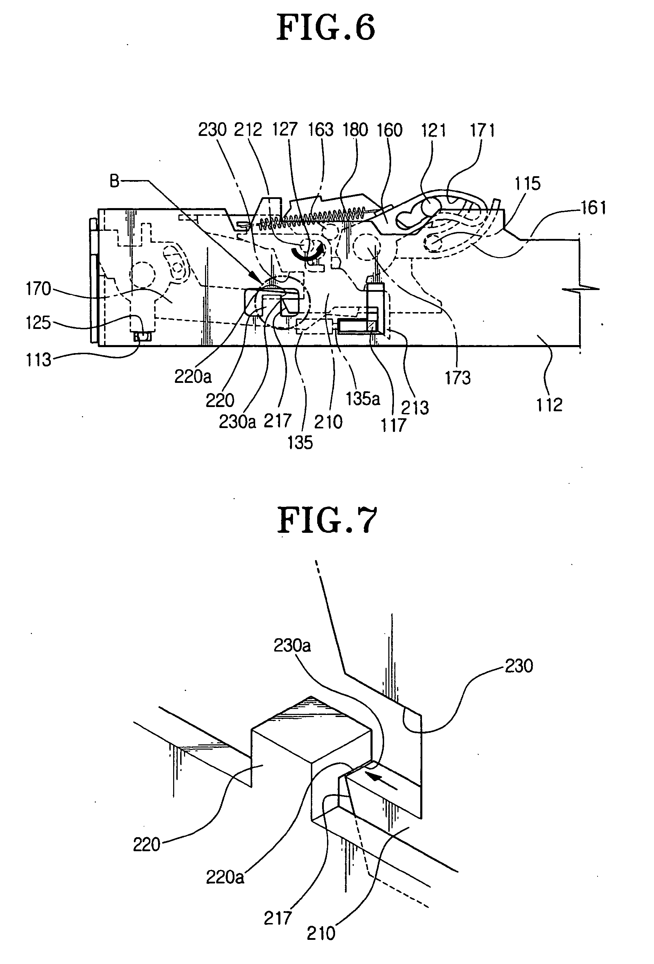

When the tape cassette housing 120 descends into close contact with the sub-chassis 112 as described above, the guide surface 217 of the locking lever 210 comes into contact with the edge 220a of the locking protrusion 220. In this state, the descending movement of the tape cassette housing 120 continues so that the edge 220a of the locking protrusion 220 is guided toward the locking recess 230 and comes into contact with the corner 230a of the locking recess 230 (i.e. a boundary between the guide surface 217 and the locking recess 230). Since the guide surface 217 is inclined, the locking lever 210 pivots on the third hinge 212 in a direction of the arrow in Figure 6, so that there occurs a recovery force in the resilient member 180. Accordingly, when the tape cassette housing 120 completely contacts the sub-chassis 112, the locking lever 210 pivots in an opposite direction to the arrow in Figure 6, due to the recovery force of the resilient member 180 so that the locking protrusion 220 is inserted into the locking recess 230. At this point, the edge 220a and the corner 230a come into linear contact with each other as shown in Figure 7. The linear contact reduces both contacting space and time. Accordingly, a "dead" point at which the conventional tape cassette housing 120 stops its movement is prevented.

When the user selects the ejection of the tape cassette, an unlocking switch 135 is operated so that a rod 135a, disposed on A side of the unlocking switch 135, protrudes beyond its rest position. Due to the operation of the unlocking switch 135, the unlocking lever 117 pivots to press the unlocking protrusion 213 so that the locking protrusion 220 is released from the locking recess 230. The unlocking protrusion 213 is pressed by the unlocking lever 117 to pivot the locking lever 210 in the direction of the arrow in Figure 6 and, accordingly, the locking protrusion 220 is released from the locking recess 230. After that, due to the recovery force of the resilient member 180, the tape cassette housing 120 automatically ascends. Simultaneously, the locking lever 210 pivots until its pivotal movement is limited by the regulating protrusion 127 to complete cassette unloading.

The locking device 200 of the tape cassette housing 120 as constructed and operated above is not limited to the embodiment described above. The shapes of the locking recess 230, the locking protrusion 220 and the locking lever 210 can be varied.

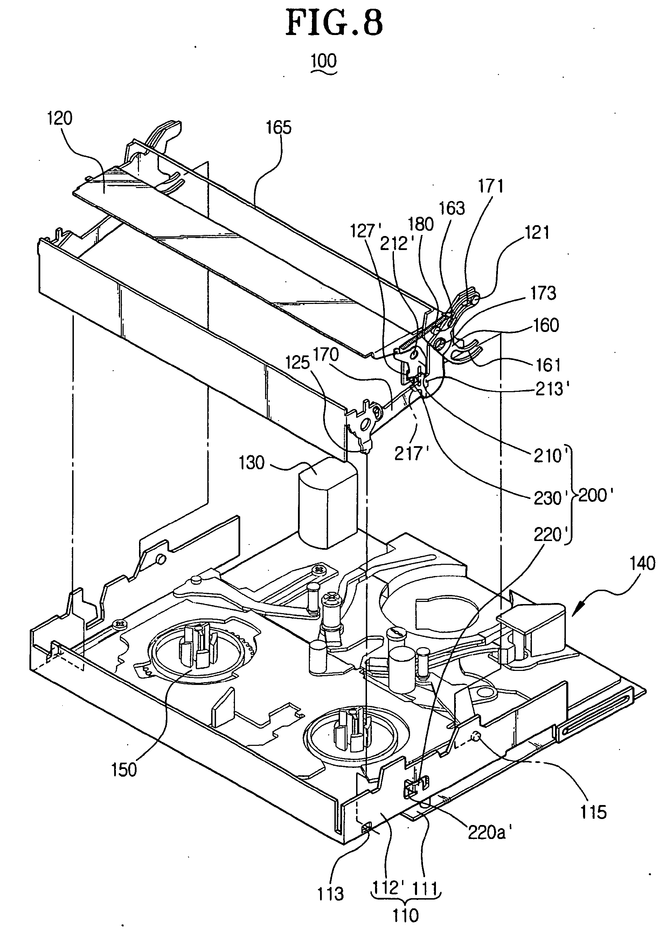

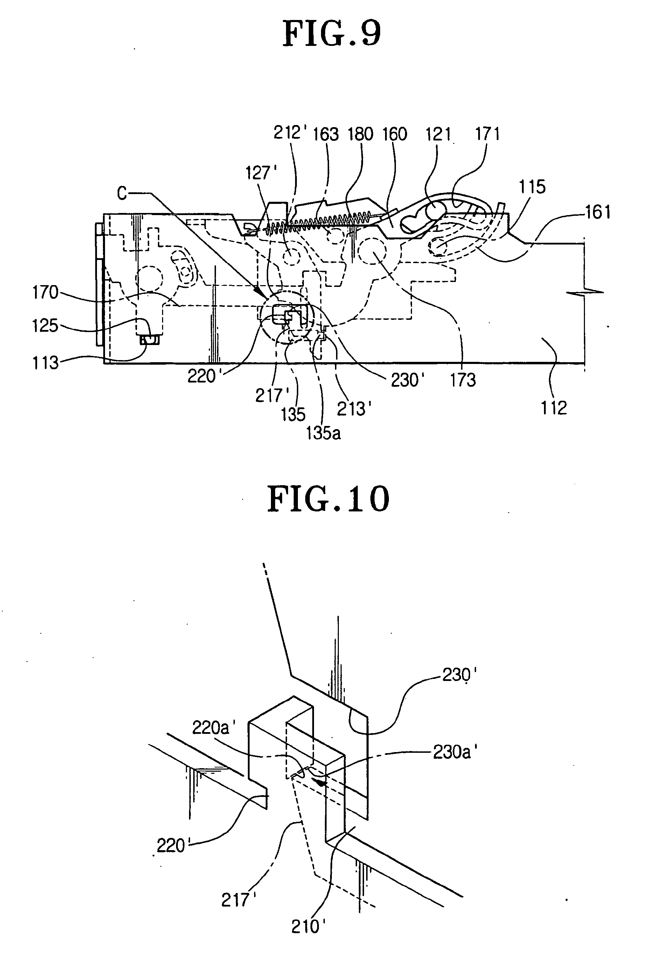

Referring to Figures 8 to 10, a second deck 100 has a tape cassette housing locking device 200' which has substantially the same construction as that of the above-described embodiment, except that the locking protrusion 220' is modified in shape and there is no need for the installation of the unlocking lever 117 (described in reference to Figure 5), because the unlocking protrusion 213' comes into contact directly with the unlocking switch 130 as the tape cassette housing 120 is locked.

The locking protrusion 220' differs from the locking protrusion 220 of the above-described embodiment in that a side end of the locking protrusion 220' is bent inward at or about 90° toward the deck 100 for insertion into a locking recess 230'.

As described above, modifying the bending portion and bending direction of the locking protrusion 220', prevents errors in combining the locking protrusion 220' and the locking recess 230'. These errors are caused by deformation of the upper portion of the locking protrusion 210 that occurs from the frequent contact of the locking recess 230 and the locking protrusion 210.

The elements and operations of the deck 100 are identical to that of the above-described embodiment and the detailed description thereof will be omitted.

In the various embodiments of the present invention as described above, the stopping of the ascending and descending movements of the tape cassette housing 120 due to the interference between the locking recess 230 and the locking protrusion 220 is prevented during loading/unloading operations of the tape cassette.

## Claims

1. A tape deck mechanism (100) comprising a main chassis (111), a sub-chassis (112) moveable between unloaded and loaded positions over the main chassis (111), a cassette carrier (120) moveable relative to the sub-chassis (112) between unloaded and loaded positions, and a latch (200) for retaining the cassette carrier (120) in its loaded position comprising a hook on the cassette carrier (120) and a projection (220) projecting inwardly from a side of the sub-chassis (112) **characterised in that** the hook defines a recess (230) such that the projection (220) is received in the recess (230) when the cassette carrier (120) is moved into its loaded position and is engaged by the hook to hold the cassette carrier (120) in its loaded position.

2. A mechanism according to claim 1, wherein the surfaces of the hook (230) and the projection (220) which are engaged to hold the cases carrier in its loaded position are flat.

3. A mechanism according to claim 1 or 2, wherein the projection (220) comprises a tab bent inwards from the side of the sub-chassis (112).

4. A mechanism according to claim 3, wherein a top end portion of the tab is bent transversely inwards from the side of the sub-chassis (112).

5. A mechanism according to claim 3, wherein a side end portion of the tab is bent transversely inwards from the side of the sub-chassis (112).

6. A mechanism according to any preceding claim, wherein the hook (230) is pivotably mounted to the cassette carrier (120) and resilient means (180) is provided for resiliently biasing the hook (230) towards its locking position.

7. A mechanism according to claim 6, further comprising a guide surface (217) and at least one regulating protrusion (127) to limit rotation of the hook (230).

8. A mechanism according to claim 7, further comprising at least one link member (160), wherein the at least one link member (160) is pivotably mounted to the cassette carrier (120) and the resilient means (180) is connected between the at least one link member (160) and the hook (230) to allow the tape cassette housing to resiliently ascend and descend to and from a sub-chassis.

9. A mechanism according to claim 8, wherein the at least one link member (160) is further pivotably mounted to a hinge (173) and rotation of the hook (230) is limited by the hinge (173) and the regulating protrusion (127).

10. A mechanism according to any of claims 1 to 9, wherein the hook (230) comprises a corner (230a) adapted to come into contact with the at least one edge (220a) of the projection (220) and then mate with the hook (230) thereby holding the cassette carrier (120) in its loaded position.

11. A mechanism according to any preceding claim, the hook (230) further comprising an unlocking protrusion (213) and the sub-chassis (112) further comprising an unlocking switch (135) and an unlocking lever (117), wherein the unlocking switch (135) contacts the unlocking lever (117) which acts on the unlocking protrusion such that the hook (230) pivots and the projection (220) disengages therefrom for releasing the cassette carrier (230) from its loaded position.

12. A method for loading a tape deck comprising a main chassis (111), a sub-chassis (112), a cassette carrier (120), and a latch (200) comprising a hook on the cassette carrier (120) and, a projection (220) projecting inwardly from a side of the sub-chassis (112), the method comprising the steps of:
a) moving the sub-chassis (112) between unloaded and loaded positions over the main chassis (111),
b) moving the cassette carrier (120) relative to the sub-chassis (112) between unloaded and loaded positions, and,
c) retaining the cassette carrier (120) in its loaded position by means of the latch (200)
**characterised in that** the hook defines a recess (230), and the method further comprises the step of enabling the projection (220) on the sub-chassis (112) to be received in the recess (230) when the cassette carrier (120) is moved into its loaded position so that the hook engages the projection (220) to hold the cassette carrier (120) in its loaded position.

## Patentansprüche

1. Kassettenlaufwerkmechanismus (100), umfassend ein Hauptchassis (111), ein Sub-Chassis (112), das zwischen nicht geladenen und geladenen Positionen über dem Hauptchassis (111) bewegt werden kann, einen Kassettenträger (120), der relativ zu dem Sub-Chassis (112) zwischen nicht geladenen und geladenen Positionen bewegt werden kann, und eine Verriegelung (200) zum Festhalten des Kassettenträgers (120) in seiner geladenen Position, die einen Haken am Kassettenträger (120) und einen Vorsprung (220), der von einer Seite des Sub-Chassis (112) vorspringt, umfasst, **dadurch gekennzeichnet, dass** der Haken eine Aussparung (230) definiert, so dass der Vorsprung (220) in der Aussparung (230) aufgenommen wird, wenn der Kassettenträger (120) in seine geladene Position bewegt wird, und der Haken in Eingriff mit ihm kommt, um den Kassettenträger (120) in seiner geladenen Position zu halten.

2. Mechanismus nach Anspruch 1, bei dem die Oberflächen des Hakens (230) und des Vorsprungs (220), die miteinander in Eingriff sind, um den Kassettenträger in seiner geladenen Position zu halten, flach sind.

3. Mechanismus nach Anspruch 1 oder 2, bei dem der Vorsprung (220) einen von der Seite des Sub-Chassis (112) einwärts gebogenen Ansatz umfasst.

4. Mechanismus nach Anspruch 3, bei dem ein oberer Endteil des Ansatzes von der Seite des Sub-Chassis (112) transversal einwärts gebogen ist.

5. Mechanismus nach Anspruch 3, bei dem ein Seitenendteil des Ansatzes von der Seite des Sub-Chassis (112) transversal einwärts gebogen ist.

6. Mechanismus nach einem der vorhergehenden Ansprüche, bei dem der Haken (230) schwenkbar an dem Kassettenträger (120) montiert ist und ein federndes Mittel (180) zum federnden Vorspannen des Hakens (230) in Richtung auf seine Verriegelungsrichtung bereitgestellt ist.

7. Mechanismus nach Anspruch 6, der ferner eine Führungsfläche (217) und wenigstens einen Regulierungsvorsprung (127) zum Begrenzen der Drehung des Hakens (230) aufweist.

8. Mechanismus nach Anspruch 7, der ferner wenigstens ein Verbindungselement (160) aufweist, wobei das wenigstens eine Verbindungselement (160) schwenkbar an dem Kassettenträger (120) montiert ist und das federnde Mittel (180) zwischen dem wenigstens einen Verbindungselement (160) und dem Haken (230) eingehängt ist, damit sich das Bandkassettengehäuse federnd zu und von einem Sub-Chassis heben bzw. senken kann.

9. Mechanismus nach Anspruch 8, bei dem das wenigstens eine Verbindungselement (160) ferner schwenkbar an einem Gelenk (173) montiert ist und die Drehung des Hakens (230) von dem Gelenk (173) und dem Regulierungsvorsprung (127) begrenzt wird.

10. Mechanismus nach einem der Ansprüche 1 bis 9, bei dem der Haken (230) eine Ecke (230a) umfasst, die so ausgeführt ist, dass sie mit dem wenigstens einen Rand (220a) des Vorsprungs (220) in Kontakt kommt und dann mit dem Haken (230) zusammenpasst wird, wodurch der Kassettenträger (120) in seiner geladenen Position gehalten wird.

11. Mechanismus nach einem der vorhergehenden Ansprüche, wobei der Haken (230) ferner einen Entriegelungsvorsprung (213) aufweist und das Sub-Chassis (112) ferner einen Entriegelungsschalter (135) und einen Entriegelungshebel (117) aufweist, wobei der Entriegelungsschalter (135) den Entriegelungshebel (117) berührt, welcher auf den Entriegelungsvorsprung wirkt, so dass der Haken (230) geschwenkt wird und der Vorsprung (220) außer Eingriff damit kommt, um den Kassettenträger (230) aus seiner geladenen Position zu lösen.

12. Verfahren zum Laden eines Kassettenlaufwerks, umfassend ein Hauptchassis (111), ein Sub-Chassis (112), einen Kassettenträger (120) und eine Verriegelung (200), die einen Haken am Kassettenträger (120) und einen Vorsprung (220), der von einer Seite des Sub-Chassis (112) einwärts vorspringt, umfasst, wobei das Verfahren die folgenden Schritte umfasst:
a) Bewegen des Sub-Chassis (112) zwischen einer nicht geladenen und einer geladenen Position über das Hauptchassis (111),
b) Bewegen des Kassettenträgers (120) relativ zu dem Sub-Chassis (112) zwischen nicht geladenen und geladenen Positionen und
c) Festhalten des Kassettenträgers (120) mithilfe der Verriegelung (200) in seiner geladenen Position;
**dadurch gekennzeichnet, dass** der Haken eine Aussparung (230) definiert und das Verfahren ferner den Schritt des Ermöglichens aufweist, dass der Vorsprung (220) an dem Sub-Chassis (112) in der Aussparung (230) aufgenommen wird, wenn der Kassettenträger (120) in seine geladene Position bewegt wird, so dass der Haken mit dem Vorsprung (220) in Eingriff kommt, um den Kassettenträger (120) in seiner geladenen Position zu halten.

## Revendications

1. Platine de défilement (100) comprenant un châssis principal (111), un sous-châssis (112) mobile entre des positions déchargée et chargée sur le châssis principal (111), un support de cassette (120) mobile par rapport au sous-châssis (112) entre des positions déchargée et chargée, et un verrou (200) pour retenir le support de cassette (120) dans sa position chargée, comprenant un crochet sur le support de cassette (120) et une saillie (220) dépassant vers l'intérieur à partir d'un côté du sous-châssis (112), **caractérisé en ce que** le crochet définit un évidement (230) de telle sorte que la saillie (220) est reçue dans l'évidement (230) lorsque le support de cassette (120) est amené dans sa position chargée, et est engagée par le crochet pour maintenir le support de cassette (120) dans sa position chargée.

2. Mécanisme selon la revendication 1, dans lequel les surfaces du crochet (230) et de la saillie (220) qui sont engagées pour maintenir le support de cassette dans sa position chargée sont plates.

3. Mécanisme selon la revendication 1 ou 2, dans lequel la saillie (220) est constituée d'une languette courbée vers l'intérieur à partir du côté du sous-châssis (112).

4. Mécanisme selon la revendication 3, dans lequel une partie d'extrémité supérieure de la languette est courbée transversalement vers l'intérieur à partir du côté du sous-châssis (112).

5. Mécanisme selon la revendication 3, dans lequel une partie d'extrémité latérale de la languette est courbée transversalement vers l'intérieur à partir du côté du sous-châssis (112).

6. Mécanisme selon l'une quelconque des revendications précédentes, dans lequel le crochet (230) est monté de façon pivotante sur le support de cassette (120) et un moyen élastique (180) est prévu pour rappeler le crochet (230) de manière élastique vers sa position de verrouillage.

7. Mécanisme selon la revendication 6, comprenant en outre une surface de guidage (217) et au moins une saillie de régulation (127) pour limiter la rotation du crochet (230).

8. Mécanisme selon la revendication 7, comprenant en outre un élément de liaison (160), le ou les éléments de liaison (160) étant montés de façon pivotante sur le support de cassette (120) et le moyen élastique (180) étant relié entre le ou les éléments de liaison (160) et le crochet pour permettre au boîtier de cassette de monter et descendre de manière élastique vers et du sous-châssis.

9. Mécanisme selon la revendication 8, dans lequel le ou les éléments de liaison (160) sont en outre montés de manière pivotante sur une charnière (173) et la rotation du crochet (230) est limitée par la charnière (173) et la saillie de régulation (127).

10. Mécanisme selon l'une quelconque des revendications 1 à 9, dans lequel le crochet (230) comprend un angle (230a) adapté pour entrer en contact avec le ou les bords (220a) de la saillie (220) puis s'engager avec le crochet (230) pour maintenir ainsi le support de cassette (120) dans sa position chargée.

11. Mécanisme selon l'une quelconque des revendications précédentes, le crochet (230) comprenant en outre une saillie de déverrouillage (213) et le sous-châssis (112) comprenant en outre un contacteur de déverrouillage (135) et un levier de déverrouillage (117), dans lequel le contacteur de déverrouillage (135) entre en contact avec le levier de déverrouillage (117) qui agit sur la saillie de déverrouillage de telle sorte que le crochet (230) pivote et que la saillie (220) s'en dégage pour libérer le support de cassette (230) de sa position chargée.

12. Procédé pour charger une platine de défilement comprenant un châssis principal (111), un sous-châssis (112), un support de cassette (120) et un verrou (200) constitué d'un crochet sur le support de cassette (120) et d'une saillie (220) dépassant vers l'intérieur à partir d'un côté du sous-châssis (112), le procédé comprenant les étapes consistant à :
a) déplacer le sous-châssis (112) entre les positions déchargée et chargée sur le châssis principal (111),
b) déplacer le support de cassette (120) par rapport au sous-châssis (112) entre les positions déchargée et chargée, et
c) retenir le support de cassette (120) dans sa position chargée au moyen du verrou (200)
**caractérisé en ce que** le crochet définit un évidement (230), et le procédé comprend en outre l'étape consistant à permettre à la saillie (220) du sous-châssis (112) d'être reçue dans l'évidement (230) lorsque le support de cassette (120) est amené dans sa position chargée de sorte que le crochet s'engage avec la saillie (220) pour maintenir le support de cassette (120) dans sa position chargée.
